# EUROPEAN PATENT APPLICATION

(11) **EP 4 654 012 A1**
(43) Date of publication of application: **26.11.2025**
(21) Application number: 23926831.1
(22) Date of filing: 16.03.2023
(51) Int. Cl.: G06F 9/50

(54) **COMPUTING POWER RESOURCE SCHEDULING METHOD AND APPARATUS**

(71) Applicant: Huawei Technologies Co., Ltd., Shenzhen, Guangdong 518129 (CN)
(72) Inventor: LIANG, Wenliang, Shenzhen, Guangdong 518129 (CN); SHEN, Haihua, Shenzhen, Guangdong 518129 (CN); WANG, Enbo, Shenzhen, Guangdong 518129 (CN); LI, Fangfang, Shenzhen, Guangdong 518129 (CN); LIN, Hao, Shenzhen, Guangdong 518129 (CN)
(74) Representative: Körber, Martin Hans
(86) International application number: PCT/CN2023/082013
(87) International publication number: WO 2024/187479

(57) **Abstract**

A computing power resource scheduling method and apparatus in a communication system are provided. In a computing power resource scheduling manner of fusing scheduling of a resource scheduling device and an active request of a computing power node, services can be scheduled efficiently and appropriately to resources on a cloud, an edge, and a device for collaborative processing. The method includes: A resource scheduling device sends deployment policy information to a corresponding computing power node. The resource scheduling device receives task request information generated by the computing power node based on the deployment policy information. The resource scheduling device sends execution policy information to the computing power node, where the execution policy information is generated based on the task request information and to-be-scheduled task information.

## Description

### TECHNICAL FIELD

This application relates to the field of communication technologies, and in particular, to a computing power resource scheduling method and apparatus in a communication system.

### BACKGROUND

An artificial intelligence (artificial intelligence, AI) technology is a branch of computer science, runs through history of computer development, and is an important development direction in the information technology industry. With development of communication technologies, from basic voice communication in the 1G era, voice and text communication in the 2G era, multimedia applications (music, image, and video) in the 3G era, mobile internet applications (livestreaming, mobile shopping, and mobile social networking) in the 4G era to internet of everything (internet of vehicles, uncrewed aerial vehicle, industrial remote management, and smart grid) in the 5G era, increasingly more applications are intelligentized through AI, and AI is ubiquitous in the 6G era. There are various AI service models, and model sizes increase exponentially. Currently, the AI services are mainly executed in cloud and cloud/edge environments.

In addition, a computing power capability that can be provided by a terminal device is increasingly enhanced, and services carried by the terminal device are increasingly diversified (for example, a mobile phone, a computer, a wearable device, a smart home, and a vehicle-mounted device). Rapid evolution of a mobile communication system also brings increasingly more new functions to the terminal device, and a computing power capability of a terminal side is continuously improved. However, currently, there is no good solution to enable a terminal to provide computing power for cloud-edge-device collaboration and schedule services (such as AI services) efficiently and appropriately.

### SUMMARY

According to a computing power resource scheduling method and apparatus in a communication system provided in embodiments of this application, in a computing power resource scheduling manner of fusing scheduling of a resource scheduling device and an active request of a computing power node, services can be scheduled efficiently and appropriately to resources on a cloud, an edge, and a device for collaborative processing.

According to a first aspect, this application provides a computing power resource scheduling method in a communication system. The method includes: A resource scheduling device sends deployment policy information to a corresponding computing power node. The resource scheduling device receives task request information generated by the computing power node based on the deployment policy information. The resource scheduling device sends execution policy information to the computing power node, where the execution policy information is generated based on the task request information and to-be-scheduled task information.

According to the computing power resource scheduling method provided in the first aspect, scheduling is divided into two steps: a deployment policy and an execution policy, and scheduling is performed with reference to a task request of the computing power node, so that scheduling can be performed more flexibly, to cope with a problem of dynamic computing power resources.

In a possible implementation, the deployment policy information includes a computing power node ID and a deployment task type. The deployment policy information indicates which type of task the computing power node should execute.

In a possible implementation, the deployment policy information further includes computing power resource requirement information. The computing power resource requirement information may be agreed on in advance, or may be sent by using deployment policy information, and may be changed when the computing power resource requirement changes.

In a possible implementation, the computing power resource requirement information includes a computing resource requirement and a memory resource requirement.

In a possible implementation, the computing power resource requirement information further includes a storage resource requirement.

In a possible implementation, the task request information includes the computing power node ID and an executable task type. The task request information indicates which task type the resource scheduling device can allocate to the computing power node.

In a possible implementation, the task request information further includes a maximum task quantity. The task request information indicates a maximum task quantity the computing power node may execute, so that the resource scheduling device allocates an appropriate task quantity.

In a possible implementation, the execution policy information includes the computing power node ID and a to-be-executed task ID. The execution policy information indicates a task that the computing power node should execute.

In a possible implementation, the to-be-scheduled task information includes a to-be-scheduled task ID and a to-be-scheduled task type. The to-be-scheduled task information is used for selecting a to-be-executed task and generates the execution policy information.

In a possible implementation, the task request information further includes an execution unit ID, and the execution policy information further includes the execution unit ID. When a plurality of execution units are deployed on the computing power node, different execution units in the computing power node may be distinguished by using execution unit IDs.

In a possible implementation, the to-be-scheduled task information and the deployment policy information are generated based on first information, and the first information includes a service requirement. A task that needs to be completed and a corresponding deployment policy are obtained based on the service requirement.

In a possible implementation, the first information further includes computing power node resource information.

In a possible implementation, the computing power node resource information includes a computing resource and a memory resource.

In a possible implementation, the computing power node resource information further includes a storage resource.

In a possible implementation, the first information further includes status information.

In a possible implementation, the status information includes at least one of the following: computing power resource status information, data status information, task status information, and connection status information.

The resource scheduling device may generate more appropriate deployment policy information based on information related to the computing power node.

In a possible implementation, the first information further includes scheduled task information. The scheduled task information includes a scheduled task ID. When generating the deployment policy information, a scheduling policy may be adjusted based on the scheduled task information.

In a possible implementation, the method further includes: The resource scheduling device generates the execution policy information based on the task request information, the to-be-scheduled task information, and the scheduled task information. The scheduled task information includes a scheduled task ID. The to-be-scheduled task information is updated based on the scheduled task information. A scheduled task is deleted from the to-be-scheduled task information, to appropriately allocate a to-be-executed task.

In a possible implementation, the method further includes: The resource scheduling device receives second information sent by the computing power node, where the second information indicates that the computing power node does not deploy an execution unit. Due to the dynamic computing power resource, the computing power node may not be able to deploy the execution unit based on a requirement of the deployment policy information, and the resource scheduling device may learn a deployment condition of the execution unit based on the second information.

In a possible implementation, the method further includes: The resource scheduling device generates the deployment policy information based on the first information and the second information. The resource scheduling device may adjust the deployment policy information based on the information that the computing power node does not deploy an execution unit, for example, allocate an undeployed execution unit to another computing power node.

In a possible implementation, the method further includes: The resource scheduling device determines a scheduling solution based on the status information, where the scheduling solution includes a first scheduling solution and a second scheduling solution. The first scheduling solution may be any one of the foregoing implementations, and scheduling is more flexible and suitable for a scenario in which a status frequently changes. The second scheduling solution is a deterministic scheduling solution. The resource scheduling device generates scheduling policy information and sends the scheduling policy information to a corresponding computing power node for direct execution, so that a procedure is simpler.

In a possible implementation, the resource scheduling device sends information to a computing power node on a terminal side or receives information from a computing power node on a terminal side via a radio resource manager. The information may include the deployment policy information, the execution policy information, and the task request information.

In a possible implementation, the information sent by the resource scheduling device to the computing power node on the terminal side and the information received from the computing power node on the terminal side are filtered by the radio resource manager. The radio resource manager may participate in a decision of the scheduling policy.

According to a second aspect, this application provides a computing power resource scheduling method in a communication system. The method includes: A computing power node obtains deployment policy information sent by a resource scheduling device. The computing power node sends task request information to the resource scheduling device, where the task request information is generated based on the deployment policy information. The computing power node receives execution policy information sent by the resource scheduling device. The computing power node executes a corresponding task based on the execution policy information.

In a possible implementation, the deployment policy information includes a computing power node ID and a deployment task type. The deployment policy information indicates which task type of an execution unit the computing power node should deploy.

In a possible implementation, the task request information includes the computing power node ID and an executable task type. The task request information indicates which task type the resource scheduling device can allocate to the computing power node.

In a possible implementation, the task request information further includes a maximum task quantity. The task request information indicates a maximum task quantity the computing power node may execute, so that the resource scheduling device allocates an appropriate task quantity.

In a possible implementation, the execution policy information includes the computing power node ID and a to-be-executed task ID. The execution policy information indicates a task that the computing power node should execute.

In a possible implementation, the method further includes: The computing power node deploys an execution unit based on the deployment policy information.

In a possible implementation, that the computing power node deploys the execution unit based on the deployment policy information includes: The computing power node obtains corresponding execution unit information based on a deployment task type in the deployment policy information, and creates the execution unit based on the execution unit information, where the execution unit information includes an execution file or a running environment.

In a possible implementation, the deployment policy information includes computing power resource requirement information; and the computing power node creates the execution unit based on the computing power resource requirement information. The computing power resource requirement information may be indicated by using the deployment policy information, or may be preconfigured.

In a possible implementation, the computing power resource requirement information includes a computing resource requirement and a memory resource requirement.

In a possible implementation, the computing power resource requirement information further includes a storage resource requirement.

In a possible implementation, the task request information further includes an execution unit ID, and the execution policy information further includes the execution unit ID. When a plurality of execution units are deployed on the computing power node, different execution units in the computing power node may be distinguished by using execution unit IDs.

In a possible implementation, the method further includes: The computing power node determines, based on the deployment policy information and a first condition, whether to deploy an execution unit. The computing power node may independently determine whether to deploy the execution unit.

In a possible implementation, the first condition includes at least one of the following: a computing power node battery level, a computing power resource, and a user configuration.

In a possible implementation, if the computing power node does not deploy an execution unit, the computing power node sends second information to the resource scheduling device, where the second information indicates that the computing power node does not deploy an execution unit. The computing power node feeds back to the resource scheduling device when no execution unit is deployed, so that the resource scheduling device determines whether rescheduling is needed.

In a possible implementation, a computing power node on a terminal side sends information to the resource scheduling device or receives information from the resource scheduling device via a radio resource manager. The information may include the deployment policy information, the execution policy information, and the task request information.

In a possible implementation, information sent by the computing power node on the terminal side to the resource scheduling device and information received from the resource scheduling device are filtered by the radio resource manager. The radio resource manager may participate in a decision of the scheduling policy.

According to a third aspect, this application provides a computing power resource scheduling apparatus in a communication system, including: a transceiver module, configured to send deployment policy information, and receive task request information generated based on the deployment policy information; and a processing module, configured to generate execution policy information based on the task request information and to-be-scheduled task information, where the transceiver module is further configured to send the execution policy information.

In a possible implementation, the deployment policy information includes a computing power node ID and a deployment task type.

In a possible implementation, the deployment policy information further includes computing power resource requirement information.

In a possible implementation, the computing power resource requirement information includes a computing resource requirement and a memory resource requirement.

In a possible implementation, the computing power resource requirement information further includes a storage resource requirement.

In a possible implementation, the task request information includes the computing power node ID and an executable task type.

In a possible implementation, the task request information further includes a maximum task quantity.

In a possible implementation, the execution policy information includes the computing power node ID and a to-be-executed task ID.

In a possible implementation, the to-be-scheduled task information includes a to-be-scheduled task ID and a to-be-scheduled task type.

In a possible implementation, the task request information further includes an execution unit ID, and the execution policy information further includes the execution unit ID.

In a possible implementation, the to-be-scheduled task information and the deployment policy information are generated based on first information, and the first information includes a service requirement.

In a possible implementation, the first information further includes computing power node resource information.

In a possible implementation, the computing power node resource information includes a computing resource and a memory resource.

In a possible implementation, the computing power node resource information further includes a storage resource.

In a possible implementation, the first information further includes status information.

In a possible implementation, the status information includes at least one of the following: computing power resource status information, data status information, task status information, and connection status information.

In a possible implementation, the processing module is further configured to generate the execution policy information based on the task request information, the to-be-scheduled task information, and the scheduled task information. The scheduled task information includes a scheduled task ID.

In a possible implementation, the first information further includes scheduled task information.

In a possible implementation, the transceiver module is further configured to receive second information, where the second information indicates that no execution unit is deployed.

In a possible implementation, the processing module is further configured to generate the deployment policy information based on the first information and the second information.

In a possible implementation, the processing module is further configured to determine a scheduling solution based on the status information, where the scheduling solution includes a first scheduling solution and a second scheduling solution.

In a possible implementation, the transceiver module is further configured to send information to a computing power node on a terminal side or receive information from a computing power node on a terminal side via a radio resource manager.

In a possible implementation, the information sent to the computing power node on the terminal side and the information received from the computing power node on the terminal side are filtered by the radio resource manager.

For beneficial effects of the computing power resource scheduling apparatus provided in the third aspect and the possible implementations of the third aspect, refer to beneficial effects achieved by the first aspect and the possible implementations of the first aspect. Details are not described herein again.

According to a fourth aspect, this application provides a computing power resource scheduling apparatus in a communication system, including: a transceiver module, configured to obtain deployment policy information, send task request information, where the task request information is generated based on the deployment policy information, and receive execution policy information; and a processing module, configured to execute a corresponding task based on the execution policy information.

In a possible implementation, the deployment policy information includes a computing power node ID and a deployment task type.

In a possible implementation, the task request information includes the computing power node ID and an executable task type.

In a possible implementation, the task request information further includes a maximum task quantity.

In a possible implementation, the execution policy information includes the computing power node ID and a to-be-executed task ID.

In a possible implementation, the processing module is further configured to deploy the execution unit based on the deployment policy information.

In a possible implementation, the deploying the execution unit based on the deployment policy information includes: obtaining corresponding execution unit information based on a deployment task type in the deployment policy information, and creating the execution unit based on the execution unit information, where the execution unit information includes an execution file or a running environment.

In a possible implementation, the deployment policy information further includes computing power resource requirement information, and the processing module is further configured to create the execution unit based on the computing power resource requirement information.

In a possible implementation, the computing power resource requirement information includes a computing resource requirement and a memory resource requirement.

In a possible implementation, the computing power resource requirement information further includes a storage resource requirement.

In a possible implementation, the task request information further includes an execution unit ID, and the execution policy information further includes the execution unit ID.

In a possible implementation, the processing module is further configured to determine, based on the deployment policy information and a first condition, whether to deploy an execution unit.

In a possible implementation, the first condition includes at least one of the following: a computing power node battery level, a computing power resource, and a user configuration.

In a possible implementation, if the processing module does not deploy the execution unit, the transceiver module is further configured to send second information, where the second information indicates that no execution unit is deployed.

In a possible implementation, the apparatus is a computing power node on a terminal side, and the transceiver module is further configured to send information to a resource scheduling device or receive information from a resource scheduling device via a radio resource manager.

In a possible implementation, information sent by the computing power node on the terminal side to the resource scheduling device and information received from the resource scheduling device are filtered by the radio resource manager.

For beneficial effects of the computing power resource scheduling apparatus provided in the fourth aspect and the possible implementations of the fourth aspect, refer to beneficial effects achieved by the second aspect and the possible implementations of the second aspect. Details are not described herein again.

According to a fifth aspect, this application provides a computing power resource scheduling apparatus in a communication system, including: a processing module, configured to generate deployment policy information; and a transceiver module, configured to send the deployment policy information.

In a possible implementation, the deployment policy information is generated based on first information, and the first information includes a service requirement.

In a possible implementation, the deployment policy information includes a computing power node ID and a deployment task type.

In a possible implementation, the deployment policy information further includes computing power resource requirement information.

In a possible implementation, the computing power resource requirement information includes a computing resource requirement and a memory resource requirement.

In a possible implementation, the computing power resource requirement information further includes a storage resource requirement.

In a possible implementation, the processing module is further configured to generate to-be-scheduled task information.

In a possible implementation, the to-be-scheduled task information is generated based on the first information.

In a possible implementation, the transceiver module is further configured to send the to-be-scheduled task information.

In a possible implementation, the first information further includes computing power node resource information.

In a possible implementation, the computing power node resource information includes a computing resource and a memory resource.

In a possible implementation, the computing power node resource information further includes a storage resource.

In a possible implementation, the first information further includes status information.

In a possible implementation, the status information includes at least one of the following: computing power resource status information, data status information, task status information, and connection status information.

In a possible implementation, the transceiver module is further configured to obtain scheduled task information, where the first information further includes the scheduled task information.

In a possible implementation, the transceiver module is further configured to receive second information, where the second information indicates that no execution unit is deployed.

In a possible implementation, the processing module is further configured to generate the deployment policy information based on the first information and the second information.

In a possible implementation, the processing module is further configured to determine a scheduling solution based on the status information, where the scheduling solution includes a first scheduling solution and a second scheduling solution.

In a possible implementation, the transceiver module is further configured to send information to a computing power node on a terminal side or receive information from a computing power node on a terminal side via a radio resource manager.

In a possible implementation, the information sent to the computing power node on the terminal side and the information received from the computing power node on the terminal side are filtered by the radio resource manager.

For beneficial effects of the computing power resource scheduling apparatus provided in the fifth aspect and the possible implementations of the fifth aspect, refer to beneficial effects achieved by the first aspect and the possible implementations of the first aspect. Details are not described herein again.

According to a sixth aspect, this application provides a computing power resource scheduling apparatus in a communication system, including: a transceiver module, configured to receive task request information generated based on deployment policy information; and a processing module, configured to generate execution policy information based on the task request information and to-be-scheduled task information, where the transceiver module is further configured to send the execution policy information.

In a possible implementation, the transceiver module is further configured to receive the to-be-scheduled task information.

In a possible implementation, the to-be-scheduled task information is generated based on first information, and the first information includes a service requirement.

In a possible implementation, the first information further includes at least one of the following: computing power node resource information and status information.

In a possible implementation, the status information includes at least one of the following: computing power resource status information, data status information, task status information, and connection status information.

In a possible implementation, the task request information includes the computing power node ID and an executable task type.

In a possible implementation, the task request information further includes a maximum task quantity.

In a possible implementation, the execution policy information includes the computing power node ID and a to-be-executed task ID.

In a possible implementation, the to-be-scheduled task information includes a to-be-scheduled task ID and a to-be-scheduled task type.

In a possible implementation, the processing module is further configured to generate the execution policy information based on the task request information, the to-be-scheduled task information, and the scheduled task information. The scheduled task information includes a scheduled task ID.

In a possible implementation, the transceiver module is further configured to send scheduled task information.

In a possible implementation, the first information further includes scheduled task information.

In a possible implementation, the task request information further includes an execution unit ID, and the execution policy information further includes the execution unit ID.

In a possible implementation, the transceiver module is further configured to receive second information, where the second information indicates that no execution unit is deployed.

In a possible implementation, the processing module is further configured to generate the deployment policy information based on the first information and the second information.

In a possible implementation, the processing module is further configured to determine a scheduling solution based on the status information, where the scheduling solution includes a first scheduling solution and a second scheduling solution. The first scheduling solution is the scheduling solution in the first aspect or the second aspect, and the second scheduling solution is a deterministic scheduling solution in implementations of the present invention.

In a possible implementation, the transceiver module is further configured to send information to a computing power node on a terminal side or receive information from a computing power node on a terminal side via a radio resource manager.

In a possible implementation, the information sent to the computing power node on the terminal side and the information received from the computing power node on the terminal side are filtered by the radio resource manager.

For beneficial effects of the computing power resource scheduling apparatus provided in the sixth aspect and the possible implementations of the sixth aspect, refer to beneficial effects achieved by the first aspect and the possible implementations of the first aspect. Details are not described herein again.

According to a seventh aspect, an embodiment of this application provides a computing power resource scheduling apparatus in a communication system, including: a processor, configured to perform the method in any one of the first aspect, the second aspect, or the possible implementations of the first aspect and the second aspect by running a computer program or by using a logic circuit.

In a possible implementation, the computing power resource scheduling apparatus further includes a memory, and the memory is configured to store the computer program.

In a possible implementation, the computing power resource scheduling apparatus further includes a communication interface, and the communication interface is configured to input and/or output a signal.

According to an eighth aspect, an embodiment of this application provides a computing power resource scheduling system, including a resource scheduling device, configured to perform the method in the first aspect or the possible implementations of the first aspect, and a computing power node, configured to perform the method in the second aspect or the possible implementations of the second aspect.

According to a ninth aspect, an embodiment of this application provides a computer-readable storage medium, configured to store computer program instructions. A computer program enables a computer to perform the method in any one of the first aspect, the second aspect, or the possible implementations of the first aspect and the second aspect.

According to a tenth aspect, an embodiment of this application provides a computer program product, including computer program instructions. The computer program instructions enable a computer to perform the method in any one of the first aspect, the second aspect, or the possible implementations of the first aspect and the second aspect.

According to an eleventh aspect, an embodiment of this application provides a computer program. The computer program enables a computer to perform the method in the first aspect, the second aspect, or the possible implementations of the first aspect and the second aspect.

According to a twelfth aspect, an embodiment of this application provides a computing power resource scheduling system, including at least two resource scheduling devices. The at least two resource scheduling devices include a first resource scheduling unit and a second resource scheduling unit. The first resource scheduling unit may perform the method in the fifth aspect or the possible implementations of the fifth aspect, and the second resource scheduling unit may perform the method in the sixth aspect or the possible implementations of the sixth aspect.

In a possible implementation, the resource scheduling device including the second resource scheduling unit is located on an edge side, and the resource scheduling device including the first resource scheduling unit is located on a cloud side.

### BRIEF DESCRIPTION OF DRAWINGS

FIG. 1 is a diagram of an architecture of a communication system to which an embodiment of this application is applied;
FIG. 2 is a diagram of AI service computation according to an embodiment of this application;
FIG. 3 is a diagram of a scheduling solution according to an embodiment of this application;
FIG. 4 is a schematic flowchart of a computing power resource scheduling method according to an embodiment of this application;
FIG. 5A is a block diagram of a resource scheduling device according to an embodiment of this application;
FIG. 5B is another block diagram of a resource scheduling device according to an embodiment of this application;
FIG. 6 is a schematic flowchart of a computing power resource scheduling method according to an embodiment of this application;
FIG. 7 is a schematic flowchart of a computing power resource scheduling method according to an embodiment of this application;
FIG. 8 is a schematic flowchart of a computing power resource scheduling method according to an embodiment of this application;
FIG. 9 is a schematic flowchart of a computing power resource scheduling method according to an embodiment of this application;
FIG. 10 is a schematic flowchart of a computing power resource scheduling method according to an embodiment of this application;
FIG. 11 is a block diagram of a communication apparatus according to an embodiment of this application; and
FIG. 12 is another block diagram of a communication apparatus according to an embodiment of this application.

### DESCRIPTION OF EMBODIMENTS

According to a computing power resource scheduling method and apparatus provided in embodiments of this application, in a computing power resource scheduling manner of fusing scheduling of a resource scheduling device and an active request of a computing power node, services are scheduled efficiently and appropriately to resources on a cloud, an edge, and a device for collaborative processing. The method and the apparatus are based on a same technical concept. Because problem-resolving principles of the method and the apparatus are similar, mutual reference may be made to implementations of the apparatus and the method, and repeated parts are not described again.

In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects.

In embodiments of this application, a computing power resource is a computing resource and a memory resource that are needed for processing a task, and may further include a storage resource and the like. The computing resource may be different processing entities or types, for example, a CPU, a GPU, an ASIC, a TPU, an NPU, an FPGA.

The following describes technical solutions of this application with reference to accompanying drawings.

The resource scheduling method provided in embodiments of this application may be applied to various communication systems, for example, a global mobile communications (global system of mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile communications system (universal mobile telecommunication system, UMTS), a worldwide interoperability for microwave access (worldwide interoperability for microwave access, WiMAX) communication system, and a 5G communication system, for example, a 5G new radio (new radio, NR) system, and may be applied to various application scenarios of the 5G communication system, for example, an enhanced mobile broadband (enhanced mobile broadband, eMBB), ultra reliable low latency communication (ultra reliable low latency communication, URLLC), and enhanced machine-type communication (enhanced machine-type communication, eMTC). The resource scheduling method provided in embodiments of this application may also be applied to various future evolved communication systems, for example, a 6th generation (6th generation, 6G) communication system, and for another example, a space-air-sea-ground integrated communication system. The computing power resource scheduling method provided in embodiments of this application may be further applied to communication between base stations, communication between terminal devices, communication of internet of vehicles, internet of things, industrial internet, satellite communication, and the like. For example, the method may be applied to a device-to-device (Device-to-Device, D2D), vehicle-to-everything (vehicle-everything, V2X), or machine-to-machine (machine, M2M) communication systems.

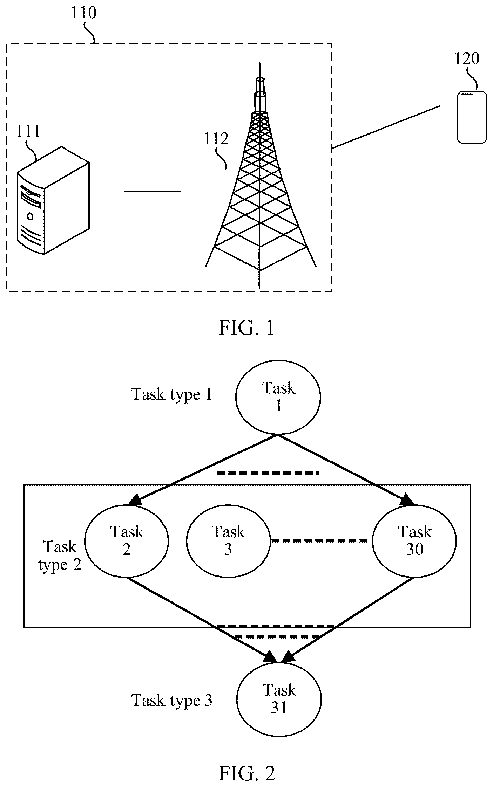

FIG. 1 is a diagram of an architecture of a communication system to which an embodiment of this application is applied. As shown in FIG. 1, the communication system includes a network device 110 and a terminal device 120. The network device 110 includes at least one cloud device 111 or an edge device 112.

The cloud device 111 is a computing cloud or a core network, and may be a network element deployed by the core network. For example, a computing capability, for example, a user plane function (user plane function, UPF) or a network data analysis function (Network Data Analytics Function, NWDAF) has been added to the network element, or a network element having a computing capability is independently deployed in the core network. This may provide a specific computing power resource. Alternatively, the cloud device 111 may be a computing cloud connected via the internet, and a specific quantity of servers are deployed by a corresponding provider to form a computing cloud to provide a specific service for a user.

The edge device 112 is a node in a radio access network (radio access network, RAN), and may also be referred to as a base station or a RAN node (or device). Currently, some examples of the edge device 112 are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), or a wireless fidelity (wireless fidelity, Wi-Fi) access point (access point, AP). The edge device 112 may alternatively be a satellite, and the satellite may also be referred to as a high-altitude platform, a high-altitude aircraft, or a satellite base station. Alternatively, the edge device 112 may be another device that has a function of the network device. For example, the edge device 112 may be alternatively a device that functions as the network device in device-to-device (device to device, D2D) communication, and vehicle-to-everything or machine-to-machine (machine to machine, M2M) communication. Alternatively, the edge device 112 may be any possible network device in a future communication system, for example, a device that is deployed at an edge and has a computing power and a communication function. In some deployments, the edge device 112 may include a central unit (central unit, CU) and a distributed unit (distributed unit, DU). In other words, provided that the device is deployed at an edge side and has a computing capability may be used as an edge device to participate in collaborative computing.

The terminal device 120 is also referred to as user equipment (user equipment, UE), a mobile station (mobile station, MS), a mobile terminal (mobile terminal, MT), or the like, and is a device that provides the user with voice and/or data connectivity. For example, the terminal device 120 includes a handheld device, a vehicle-mounted device, and the like that have a wireless connection function. If the terminal device 120 is located in a vehicle (for example, placed in the vehicle or installed in the vehicle), the terminal device 120 may be considered as a vehicle-mounted device, and the vehicle-mounted device is also referred to as an on board unit (on Board unit, OBU). Currently, the terminal device 120 may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. The terminal device 120 may alternatively be another device having a function of the terminal device. For example, the terminal device 120 may alternatively be a device that functions as the terminal device in device-to-device (device-to-device, D2D) communication, and vehicle-to-everything or machine-to-machine (machine-to-machine, M2M) communication.

By way of example, and not limitation, in embodiments of this application, the terminal device 120 may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, smart watches or smart glasses, and includes a device that is dedicated to only one type of application function and that needs to collaboratively work with another device like a smartphone, for example, various smart bands, smart helmets, or smart jewelry for monitoring physical signs.

In embodiments of this application, an apparatus configured to implement a function of the terminal device 120 is, for example, a chip, a radio transceiver, or a chip system. The apparatus configured to implement the function of the terminal device 120 may be installed, disposed, or deployed on the terminal device 120.

Compared with a cloud/edge device, a terminal device usually has the following characteristics:

1. The terminal device has limited resources. The terminal device is usually powered by a battery, and does not have a condition for long-term connection to a power supply. Therefore, a computing capability of the terminal device is usually limited by a battery capacity.

2. A radio environment is dynamic. When the terminal moves or an ambient environment changes, a channel state changes dynamically. Therefore, a transmission rate of an air interface of the terminal changes dynamically. In addition, during movement of the terminal, when a cell handover is performed, a network topology also changes dynamically.

3. Terminal devices are widely distributed.

Therefore, the terminal device may provide some computing power resources to participate in computing. However, how to schedule a service (for example, an AI service, an image processing service, a SLAM positioning service, or a channel encoding/decoding service in baseband processing) efficiently and appropriately to resources on a cloud, an edge, and a device for collaborative processing is a very important topic.

To better understand the solutions provided in embodiments of this application by a person skilled in the art, a computing power resource scheduling solution is first described. The solution may be referred to as a deterministic scheduling solution, or certainly may have another name. This is not limited in embodiments of the present invention.

For a service, a computing graph is used to represent tasks of the service. The computing graph includes M task types, and each task type includes one or more tasks. There are a total of N tasks (N≥1, M≥1). Each task may be identified by a task ID. Tasks of a same task type have a same processing flow or function and are processed by a same execution unit. In addition, tasks in a service depend on each other. For example, refer to FIG. 2. A service includes three task types, and there are 31 tasks in total. A task type 1 includes a task 1, a task type 2 includes a task 2 to 30, and a task type 3 includes a task 31.

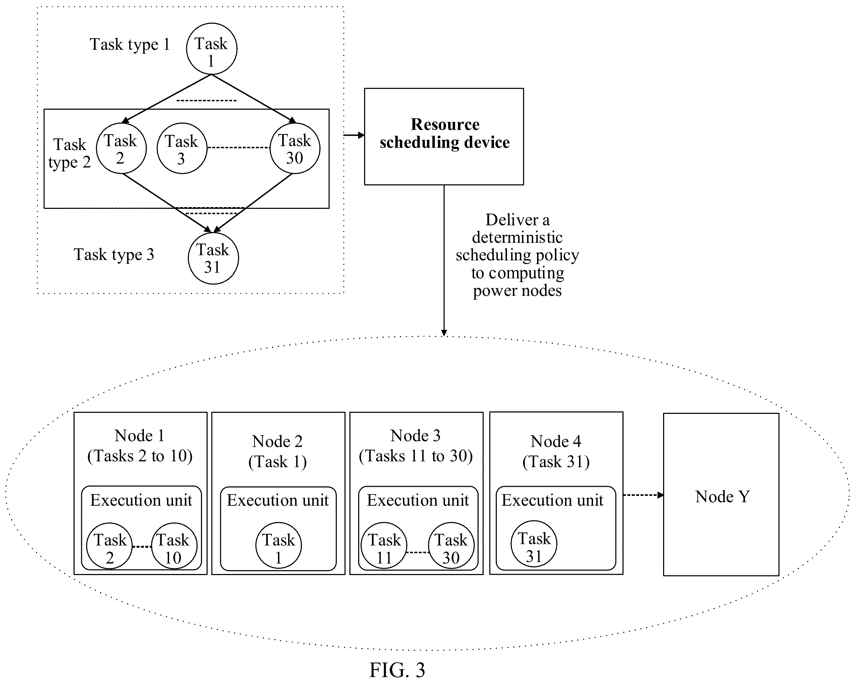

In the deterministic scheduling solution, a resource scheduling device allocates tasks to computing power nodes for processing, as shown in FIG. 3. There are Y computing power nodes in a resource pool. The resource scheduling device generates a scheduling policy, allocates 31 tasks to four computing power nodes for running, and delivers the policy to each computing power node. After receiving the policy, the computing power node creates a corresponding execution unit and executes a corresponding task.

The resource scheduling method, that is, the deterministic scheduling solution, may be mainly applied to a cloud or cloud/edge scenario, that is, a static resource environment, including the following characteristics:
(1) Connection: A transmission bandwidth between nodes is large and fixed.
(2) Computing power: A resource of each computing power node is fixed.
(3) Network topology: In normal cases, the network topology remains unchanged.

In wireless scenarios, a terminal device may provide a computing power and participate in cloud/edge/device collaboration scenarios. Resources are dynamic.

In a distributed computing scenario in which the terminal device participates as a computing power node, due to dynamic changes of a network topology, a wireless bandwidth, a computing power, and the like, the deterministic scheduling solution may not be optimal in a wireless dynamic scenario. For example:
(1) Transmission is considered when the scheduling policy is generated, but wireless transmission is dynamic. During actual execution, a transmission bandwidth is not necessarily consistent with a scheduling moment or prediction. For example, if a computing power node 1 to which a task 2 to a task 10 are allocated in S2 in the positioning service is a mobile terminal, when the resource scheduling device performs scheduling, channel quality of the terminal device is good, and high-rate transmission may be provided. During processing of a task, the terminal device cannot provide high-rate transmission due to channel quality deterioration caused by movement of the terminal device, environmental obstructions, or the like. Consequently, after the task is completed, the terminal device cannot transmit output data to a computing power node 4 (process S3 in the positioning service) in time, affecting real-time performance of the service. To ensure that the service can be normally completed, the resource scheduling device needs to regenerate a scheduling policy in real time and migrate a task to another computing power node that meets a requirement. However, if the mobile terminal is highly dynamic and a scheduling policy that is introduced is frequently generated due to the dynamic nature, scheduler loads are affected, and the real-time performance of the service is affected to some extent.
(2) The computing power is considered in the scheduling policy, but the terminal device may have a battery level change and cannot participate in subsequent computing or transmission. For example, the computing power node 1 to which the task 2 to the task 10 are allocated in S2 in the positioning service is a terminal device. During running, a battery level is lower than a threshold, and a task cannot be completed. Consequently, the resource scheduling device needs to migrate the task to another computing power node again, to ensure completion of the service, but real-time performance of the service is affected.
(3) The computing power is considered in the scheduling policy, but the terminal device needs the computing power for another service requirement. For example, the computing power node 1 to which the task 2 to the task 10 are allocated in S2 in the positioning service is a terminal device, but there is another service requirement during task processing, in other words, a resource for processing a task in S2 needs to be used for another service. Consequently, a scheduler needs to migrate the task to another computing power node again, to ensure completion of the service, but real-time performance of the service is affected.
(4) The terminal device is user equipment and cannot be completely controlled by a network. For example, in a process of providing a computing power resource to participate in computing, a terminal user reduces sharing of the computing power resource due to disconnection, preferential use of a shared computing power resource for another service, and other factors.

In addition, scheduling policy space of the foregoing deterministic scheduling technology is complex, in other words, task IDs need to be mapped (or scheduled) to the nodes (as shown in FIG. 3). Furthermore, when the network is highly dynamic, deterministic scheduling may be inappropriate, and frequent rescheduling is needed, resulting in problems such as task migration and service discontinuity.

Based on this, an embodiment of this application provides a resource scheduling method in which scheduling of a resource scheduling device and an active request of a computing power node are integrated, to schedule efficiently and appropriately a service to resources on a cloud device, an edge device, and a terminal device for collaborative processing, so that all or some dynamic problems in the foregoing deterministic scheduling technology can be resolved, and complexity of scheduling policy space can be reduced. Edge and terminal computing power nodes can also participate in scheduling to implement computing-network convergence.

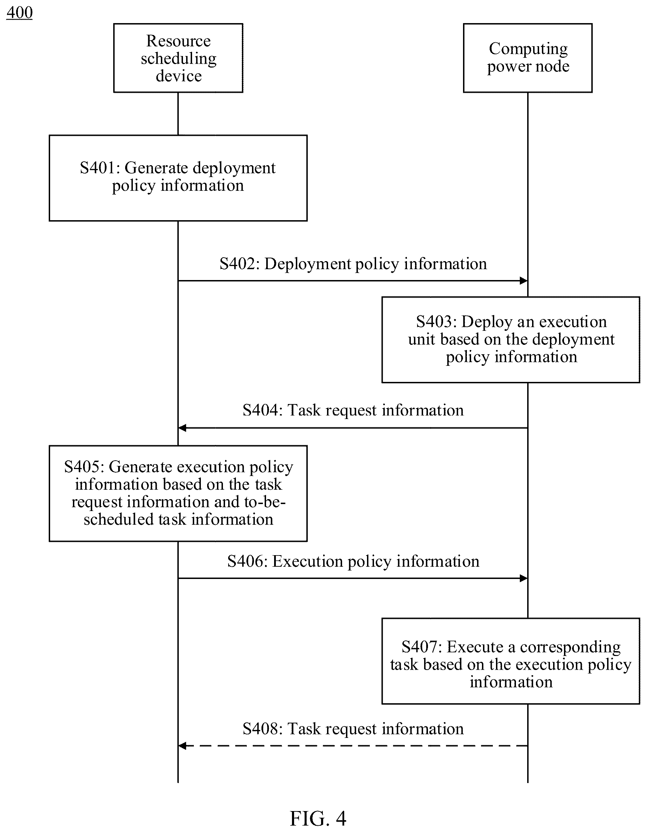

As shown in FIG. 4, a specific procedure of a resource scheduling method 400 provided in an embodiment of this application is described below. The method may be performed by a resource scheduling device and a computing power node, and may be applied to a cloud-edge-device distributed network architecture scenario. The terminal is a terminal device, the edge is an edge device, and the cloud is a cloud device. The resource scheduling device may be a network device (a cloud device and/or an edge device), may be an apparatus (for example, a chip, a chip system, or a circuit) in the network device, or may be an apparatus that can be used in cooperation with the network device. The resource scheduling device may alternatively be a terminal device, may be an apparatus (for example, a chip, a chip system, or a circuit) in the terminal device, or may be an apparatus that can be used in cooperation with the terminal device. The computing power node may be a terminal device, may be an apparatus (for example, a chip, a chip system, or a circuit) in the terminal device, or may be an apparatus that can be used in cooperation with the terminal device. The computing power node may alternatively be a network device (a cloud device and/or an edge side device), may be an apparatus (for example, a chip, a chip system, or a circuit) in the network device, or may be an apparatus that can be used in cooperation with the network device. The computing power node may be a wireless terminal device, or may be a wired terminal device.

S401: The resource scheduling device generates deployment policy information. The deployment policy information includes a computing power node ID and a deployment task type. A deployment task type corresponding to one computing power node may include one or more task types.

The deployment policy information may indicate all or some computing power nodes managed by the resource scheduling device.

The deployment policy information may be generated based on first information. The first information includes a service requirement, for example, a service type or a service real-time requirement.

The deployment policy information may further include computing power resource requirement information. The computing power resource requirement information includes a computing resource requirement and a memory resource requirement, and may further include a memory resource requirement. The computing resource requirement may be different objects or processing types, such as a CPU, a GPU, an ASIC, a TPU, an NPU, and an FPGA. When the deployment policy information does not include the computing power resource requirement information, the computing power resource requirement information is configured in advance. Specifically, each computing power node has a corresponding configuration table before accessing a network, or a network side delivers a configuration table when a computing power node initially accesses the network side. The configuration table includes a table indicating correspondences between various task types and computing power resources. When the computing power node does not learn of a computing power resource needed by a task type, or the computing power node learns of a computing power resource needed by a task type, but the required computing power resource changes due to different services, the computing power resource requirement information is delivered by using the deployment policy information.

The first information may further include computing power node resource information and/or status information. The computing power node resource information may include a computing resource and a memory resource, and may further include a storage resource. The computing resource may be different objects or processing types, such as a CPU, a GPU, an ASIC, a TPU, an NPU, and an FPGA. It may be understood that the computing power node resource information is a resource that can be provided by the computing power node, and the computing power resource requirement information is a resource needed for completing a task. The status information may include at least one of the following: computing power resource status information, data status information, task status information, and connection status information. The computing power resource status information includes a computing power resource usage of the computing power node, for example, usage of computing, a memory, or a storage. The data status information includes a status of input/output data involved in task processing in the computing power node, for example, a location of the data, and whether the data is currently available (that is, ready/unready). The task status information includes a task running status in the computing power node, for example, running, pending, failed, or succeed. The connection status information includes a connection status of the computing power node, for example, a wireless connection status of a terminal-side computing power node may include channel quality and location information, and a connection status of a cloud/edge-side computing power node may include a congestion state and loads. The resource scheduling device may preferentially select, based on the computing power node resource information and/or the status information, a computing power node with an appropriate resource and status for scheduling.

The first information may further include scheduled task information. The scheduled task information includes a scheduled task ID. The resource scheduling device may update a scheduling policy based on the scheduled task information.

The resource scheduling device periodically or aperiodically collects the status information. Specifically, that the status information is periodically collected may include: The resource scheduling device configures a reporting period, and sends a configuration message to the computing power node. The computing power node reports the status information to the resource scheduling device based on the reporting period after receiving the configuration message. That the status information is aperiodically collected may include: The resource scheduling device performs an active query. The resource scheduling device sends a status query instruction to the computing power node when the resource scheduling device needs the information. The computing power node reports the status information to the resource scheduling device after receiving the instruction. Alternatively, the resource scheduling device configures an aperiodic policy and delivers the aperiodic policy to the computing power node. The aperiodic policy includes a trigger status reporting condition, for example, a battery level being lower than a threshold E1/higher than a threshold E2, computing resource usage being lower than a threshold P1/higher than a threshold P2, and wireless information quality being lower than a threshold C1/higher than a threshold C2. The computing power node determines, based on the trigger status reporting condition, whether reporting is needed, and reports the status information to the resource scheduling device if the condition is met.

When there are a plurality of resource scheduling devices in the network, the status information may be obtained from another resource scheduling device. The plurality of resource scheduling devices may respectively obtain some status information nearby, and send the status information to the another resource scheduling device, so that the resource scheduling device obtains all status information more efficiently.

It may be understood that the deployment policy information indicates only a task type, and is not used for allocating one or more tasks to be specifically executed. One task type may include one or more tasks, and a quantity of task types is less than or equal to a quantity of tasks (where in most scenarios, a quantity of task types is far less than a quantity of tasks). Therefore, in comparison with direct task allocation, complexity of decision space for allocating the task type is reduced.

S402: The resource scheduling device sends the deployment policy information to a computing power node involved in the deployment policy information. Correspondingly, the computing power node receives the deployment policy information. When the deployment policy information involves a plurality of computing power nodes, the deployment policy information is separately sent to corresponding computing power nodes.

S403: The computing power node deploys an execution unit based on the deployment policy information. The execution unit has a function of executing a specific type of task, and is a scheduling unit (generally a minimum scheduling unit) of the resource scheduling device. Specifically, the computing power node obtains corresponding execution unit information based on a deployment task type in the deployment policy information, creates the execution unit based on the execution unit information, and allocates a resource to the execution unit based on the computing power resource requirement information. The computing power resource requirement information may be preconfigured or included in the deployment policy information. The execution unit information includes an execution file or a running environment. Optionally, the execution unit information is obtained in a local storage or download manner. It may be understood that a plurality of execution units of a same type or different types may be deployed on the computing power node, and the execution units may be distinguished by using execution unit IDs. The execution unit IDs are internal numbers of the computing power node.

S404: The computing power node sends task request information to the resource scheduling device. The task request information includes the computing power node ID and an executable task type.

The task request information is generated by the computing power node based on the deployment policy information.

When the plurality of execution units of a same type or different types are deployed on the computing power node, the obtained task request information may further include the execution unit ID. The execution unit ID is generally an internal number of the computing power node.

Optionally, the task request information further includes a maximum task quantity. The resource scheduling device schedules, based on the maximum task quantity, tasks whose quantity is generally not greater than the maximum task quantity. Correspondingly, the resource scheduling device receives the task request information.

S405: The resource scheduling device generates execution policy information based on the task request information and to-be-scheduled task information. The execution policy information includes the computing power node ID and a to-be-executed task ID.

When the task request information includes the execution unit ID, the execution policy information also correspondingly includes an execution unit ID, to distinguish different execution units.

The to-be-scheduled task information is generated by the resource scheduling device based on the first information. The to-be-scheduled task information includes a to-be-scheduled task ID and a to-be-scheduled task type.

The deployment policy information in S401 may alternatively be generated based on the to-be-scheduled task information.

Specifically, the resource scheduling device searches, based on the executable task type in the task request information, for a to-be-scheduled task ID corresponding to the task type in the to-be-scheduled task information, and determines to schedule one or more tasks to the computing power node if a plurality of tasks exist.

Optionally, the resource scheduling device generates the scheduled task information based on the task request information and the to-be-scheduled task information, or generates the scheduled task information based on the execution policy information; and updates the to-be-scheduled task information based on the scheduled task information. The scheduled task information includes a scheduled task ID. Specifically, the scheduled task ID is recorded in the scheduled task information, and the scheduled task is deleted from the to-be-scheduled task information.

It may be understood that the resource scheduling device does not necessarily allocate a task completely based on the task request information. The execution policy information may include only some task types and/or execution units and/or a quantity of tasks in the task request information. When there is no task suitable for scheduling, the resource scheduling device may not generate the execution policy information, or use special signaling to indicate that no task needs to be processed by the computing power node.

S406: The resource scheduling device sends the execution policy information to the computing power node. Correspondingly, the computing power node receives the execution policy information.

S407: The computing power node executes a corresponding task based on the execution policy information.

S408: After the execution is completed, the computing power node may send the task request information to the resource scheduling device again. This is similar to step S404, and subsequent steps S405 to S408 continue to be performed. The computing power node may determine, based on a computing power node battery level, a computing power resource, a user configuration, and other conditions, whether to send the task request information again. When the conditions are met, the task request information is sent again. Otherwise, the task request information is not sent. This step may be repeated a plurality of times, and is not described again. When no execution unit of a specific type is deployed on the computing power node, the computing power node may no longer send the task request information to the resource scheduling device.

When the resource scheduling device is a network device and the computing power node is a wireless terminal device, a message delivered by the resource scheduling device to the computing power node may be delivered by using L1/L2/L3 signaling, for example, L3 RRC signaling, an L2 MAC CE, and L1 PHY DCI (for example, a PDCCH/PDSCH channel). The message delivered by the resource scheduling device to the computing power node includes the deployment policy information and the execution policy information. A message sent by the computing power node to the resource scheduling device is uploaded by using L1/L2/L3 signaling, for example, L3 RRC signaling, an L2 MAC CE, and L1 PHY UCI (for example, a PUCCH/PUSCH channel). The message sent by the computing power node to the resource scheduling device includes the task request information.

For example, refer to FIG. 2. For a real-time positioning service, due to a requirement on real-time performance (for example, for a high-speed vehicle, delayed positioning may be of no value), a procedure of the positioning service needs to be divided into three steps.

S1: Data preprocessing: Process the collected data to adapt to an input of AI inference. This is used as a task type 1. For one inference, there is only one task of this type, that is, a task 1.

S2: AI inference: Perform online inference on the data of S1. This is used as a task type 2. To ensure real-time performance, data of the task type 2 is split into a plurality of copies for parallel processing. For one inference, there are 29 tasks of this type, that is, a task 2 to a task 30.

S3: Data post-processing: Perform final positioning on an output of S2. This is used as a task type 3. For one inference, there is only one task of this type, that is, a task 31.

Therefore, for the positioning service in the foregoing example, a quantity M of task types is 3, and a total quantity N of tasks in one inference is 31. The task 1 belongs to the task type 1, the task 2 to the task 30 belong to the task type 2, and the task 31 belongs to the task type 3. Because data exchange is involved, a task of a next step may be performed only after a task of a previous step is complete.

The resource scheduling device generates the to-be-scheduled task information, as shown in Table 1.

**Table 1**

| Task type | Task ID |
|---|---|
| 1 (Data preprocessing) | 1 |
| 2 (AI inference) | 2 to 30 |
| 3 (Data post-processing) | 31 |

The resource scheduling device generates the deployment policy information, as shown in Table 2.

**Table 2**

| Computing power node ID | Computing power node resource information | Task type |
|---|---|---|
| 1 | Computing resource: 2 CPU | 1 |
| | Memory resource: 800 MB | |
| | Storage resource: 0 MB | |
| 2 | Computing resource: 1 CPU | 2 |
| | Memory resource: 500 MB | |
| | Storage resource: 0 MB | |
| 3 | Computing resource: 1 GPU | 2 and 3 |
| | Memory resource: 2000 MB | |
| | Storage resource: 0 MB | |

The resource scheduling device separately sends the deployment policy information to computing power nodes 1, 2, and 3.

The computing power nodes 1, 2, and 3 each receive the deployment policy information, and deploy an execution unit based on the deployment policy information. The computing power node 1 deploys an execution unit for executing the task type 1. The computing power node 2 deploys an execution unit 1 and an execution unit 2 for executing the task type 2. The computing power node 3 deploys an execution unit 1 for executing the task type 2 and an execution unit 2 for executing the task type 3.

The computing power node 1 sends the task request information to the resource scheduling device, as shown in Table 3.

**Table 3**

| Computing power node ID | Executable task type |
|---|---|
| 1 | 1 |

The computing power node 2 sends the task request information to the resource scheduling device, as shown in Table 4.

**Table 4**

| Computing power node ID | Execution unit ID | Executable task type | Maximum task quantity |
|---|---|---|---|
| 2 | 1 | 2 | 2 |
| 2 | 2 | 2 | 4 |

The computing power node 3 sends the task request information to the resource scheduling device, as shown in Table 5.

**Table 5**

| Computing power node ID | Execution unit ID | Executable task type |
|---|---|---|
| 3 | 1 | 2 |
| 3 | 2 | 3 |

Initial scheduled task information of the resource scheduling device does not include any task. The to-be-scheduled task information is searched for a task of the task type 1 based on the task request information of the computing power node 1, to obtain the task 1. The task 1 is scheduled to the computing power node 1, the task 1 is added to the scheduled task information, and the task 1 is deleted from to-be-scheduled task information. The execution policy information is shown in Table 6.

**Table 6**

| Computing power node ID | Execution task ID |
|---|---|
| 1 | 1 |

The to-be-scheduled task information is searched for a task of the task type 2 based on the task request information of the computing power node 2, to obtain the task 2 to the task 30. Therefore, all the task 2 to the task 30 may be scheduled to the computing power node 2. Because maximum task quantities of the execution unit 1 and the execution unit 2 of the computing power node 2 are respectively 2 and 4, scheduled task quantities are respectively less than or equal to 2 and 4. The resource scheduling device determines to schedule the task 2 and the task 3 to the execution unit 1 of the computing power node 2, schedule the task 4 to the task 6 to the execution unit 2 of the computing power node 2, add the task 2 to the task 6 to the scheduled task information, and delete the task 2 to the task 6 from the to-be-scheduled task information. The execution policy information is shown in Table 7.

**Table 7**

| Computing power node ID | Execution unit ID | Execution task ID |
|---|---|---|
| 2 | 1 | 2 and 3 |
| 2 | 2 | 4 to 6 |

According to the task request information of the computing power node 3, because a task of the task type 3 depends on the task of the task type 2, the resource scheduling device determines not to schedule the task of the task type 3 first. The to-be-scheduled task information is searched for the task of the task type 2, to obtain the task 7 to the task 30. Therefore, the task 7 to the task 30 may be scheduled to the execution unit 1 of the computing power node 3. The task request information does not include the maximum task quantity, and the resource scheduling device may determine the task quantity. The resource scheduling device determines to schedule the task 7 to the task 9 to the execution unit 1 of the computing power node 2, adds the task 7 to the task 9 to the scheduled task information, and deletes the task 7 to the task 9 from the to-be-scheduled task information. The execution policy information is shown in Table 8.

**Table 8**

| Computing power node ID | Execution unit ID | Execution task ID |
|---|---|---|
| 3 | 1 | 7 to 9 |

The computing power nodes 1, 2, and 3 respectively execute corresponding tasks after receiving the execution policy information.

In the embodiment described in FIG. 4 of the present invention, resource scheduling is divided into two parts: a deployment policy and an execution policy. The deployment policy is only for allocating a task type, scheduling policy space is simple, and only an execution unit i (which may process a task of a specific task type) needs to be mapped to a computing power node y. The execution policy is for allocating a specific task, and the computing power node sends task request information to obtain a task, so that dynamic and flexible resource scheduling in which scheduling of the resource scheduling device and an active request of the computing power node are integrated is implemented, and services can be scheduled efficiently and appropriately to resources on a cloud, an edge, and a device for collaborative processing. For example, when a specific positioning service is performed, because the terminal is dynamic (for example, in a moving scenario, the terminal is not suitable for collaboration due to poor radio channel quality at some moments), based on the solution in this embodiment of this application, the scheduling policy can be adjusted in time, to ensure real-time positioning.

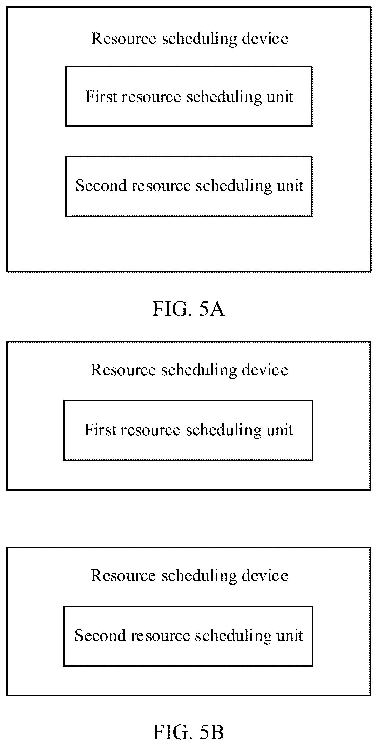

The resource scheduling device in the foregoing embodiment may include a first resource scheduling unit and a second resource scheduling unit. The first resource scheduling unit implements a deployment policy scheduling function (for example, steps S401 and S402 in the foregoing embodiment), and may be mainly configured to determine a task type of an execution unit deployed by the computing power node. The second resource scheduling unit implements an execution policy scheduling function (for example, steps S405 and S406 in the foregoing embodiment), and may be mainly configured to allocate a specific task to the computing power node based on an executable task type of the computing power node. The first resource scheduling unit and the second resource scheduling unit may be integrated (for example, located in a same entity apparatus/device), or may be separated (for example, located in different entity apparatuses/devices), as shown in FIG. 5A and FIG. 5B. It may be understood that the resource scheduling device may alternatively include only the first resource scheduling unit or the second resource scheduling unit. In a network, a plurality of resource scheduling devices may form a resource scheduling system, and perform resource scheduling together. The plurality of resource scheduling devices may respectively include a first resource scheduling unit and a second resource scheduling unit, or may include only a first resource scheduling unit or a second resource scheduling unit. The entire resource scheduling system includes at least one first resource scheduling unit and at least one second resource scheduling unit.

When a network scale is small, only one resource scheduling device may be deployed, and the resource scheduling device includes the first resource scheduling unit and the second resource scheduling unit. When a network scale is large, there are a large quantity of computing power nodes, and a service amount is large, still using a resource scheduling device deployed in a centralized manner causes poor real-time scheduling. The plurality of resource scheduling devices may be deployed, and a problem that resource scheduling is not real-time in a large-scale network scenario is resolved by deploying the resource scheduling devices in a distributed manner. The resource scheduling devices may collaborate with each other through information exchange. For example, a resource scheduling device including the first resource scheduling unit is located on a cloud side, and is configured to generate a deployment policy. A resource scheduling device including the second resource scheduling unit is located on an edge side, and is configured to generate an execution policy. The resource scheduling device including the second resource scheduling unit is deployed on an area close to the computing power node, so that a delay of frequent interaction between the resource scheduling device and the computing power node can be reduced. Alternatively, the resource scheduling device may be deployed on a terminal side. In this case, the resource scheduling device is generally responsible for scheduling a computing power resource of another terminal serving as a computing power node in an area managed by a terminal side device.

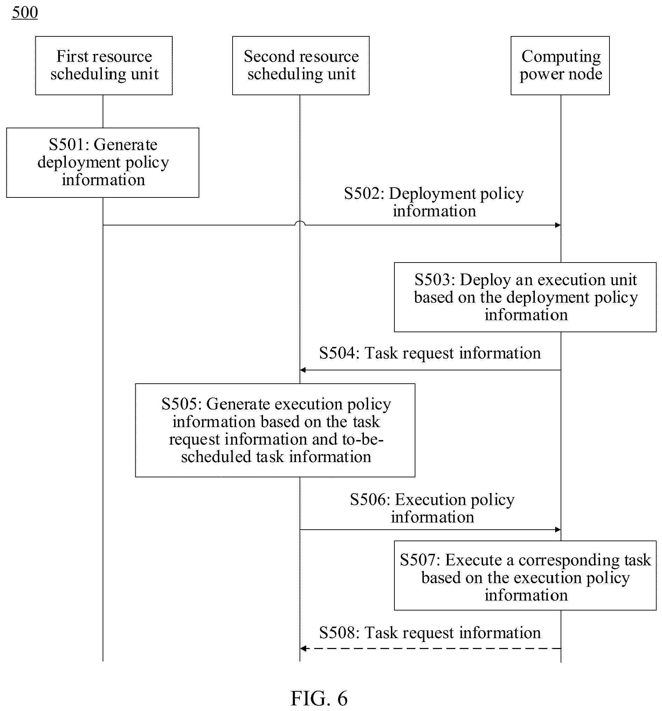

Based on the embodiment described in FIG. 4, the following describes in detail a scenario in which the first resource scheduling unit and the second resource scheduling unit are located in different physical entities with reference to FIG. 6. In an example, only one first resource scheduling unit and one second resource scheduling unit are deployed, and a plurality of first resource scheduling units or second resource scheduling units may be deployed on a network side. FIG. 6 is a schematic interaction flowchart of a scheduling method according to an embodiment of this application. The method 500 may include the following steps.

S501: A first resource scheduling unit generates deployment policy information.

Optionally, the first information further includes scheduled task information. The scheduled task information is obtained from a second resource scheduling unit.

S502: The first resource scheduling unit separately sends the deployment policy information to a computing power node involved in the deployment policy information. Correspondingly, the computing power node receives the deployment policy information.

S503: The computing power node deploys an execution unit based on the deployment policy information.

S504: The computing power node sends task request information to the second resource scheduling unit.

S505: The second resource scheduling unit generates execution policy information based on the task request information and to-be-scheduled task information. The to-be-scheduled task information is obtained from the first resource scheduling unit.

S506: The second resource scheduling unit sends the execution policy information to the computing power node.

S507: The computing power node executes a corresponding task based on the execution policy information.

Optionally, after S508 is performed, the computing power node sends the task request information to the second resource scheduling unit again. This is similar to step S504, and subsequent steps S505 to S508 continue to be performed. The computing power node may determine, based on a computing power node battery level, a computing power resource, a user configuration, and other conditions, whether to send the task request information again. When the conditions are met, the task request information is sent again. Otherwise, the task request information is not sent. This step may be repeated a plurality of times, and is not described again.

For more details of the foregoing steps S501 to S508, refer to steps S401 to S408. Details are not described again.

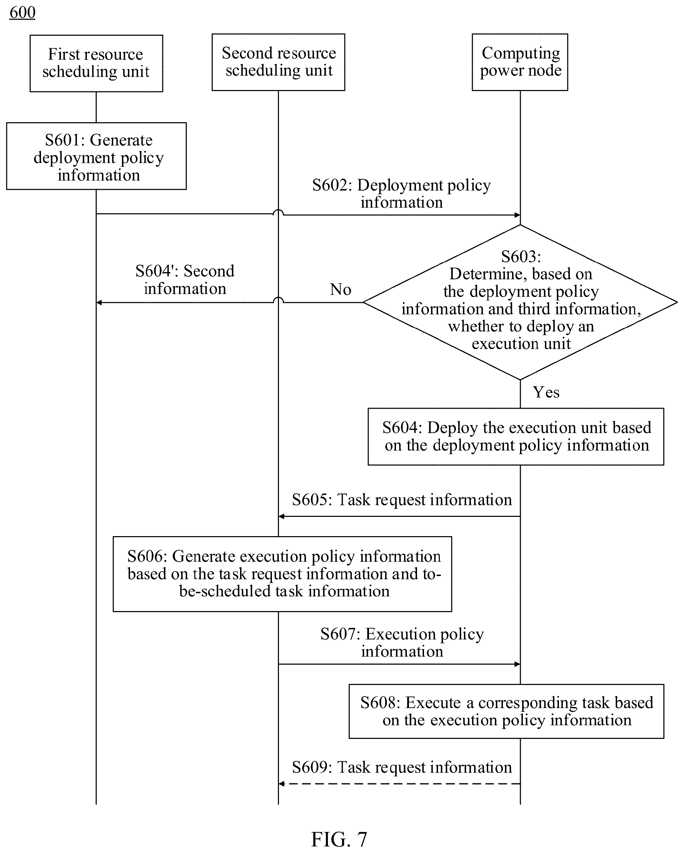

Because the computing power node is dynamic (especially after a wireless terminal is added as a computing power node), when the deployment policy information is received, it is possible that the execution unit cannot be deployed as needed. Based on the related embodiments described in FIG. 4 and FIG. 6, this embodiment of the present invention further includes a scenario in which the computing power node does not deploy an execution unit. FIG. 7 is described by using an example in which an execution unit is selectively deployed based on the embodiment described in FIG. 6. FIG. 7 is a schematic interaction flowchart of a scheduling method according to an embodiment of this application. The method 600 may include the following steps.

S601: A first resource scheduling unit generates deployment policy information.

S602: The first resource scheduling unit separately sends the deployment policy information to a computing power node involved in the deployment policy information. Correspondingly, the computing power node receives the deployment policy information.

S603: The computing power node determines, based on the deployment policy information and first condition, whether to deploy an execution unit. The first condition includes at least one of the following: a computing power node battery level, a computing power resource, and a user configuration. If at least one condition is not met, no execution unit is deployed. For example, if the computing power node battery level is less than a battery level configuration threshold for providing a computing power, the execution unit is not deployed. Otherwise, the execution unit may be deployed. The computing power resource is a resource that can be provided by the computing power node. If the computing power resource is less than a resource needed by a to-be-deployed execution unit, the execution unit is not deployed. Otherwise, the execution unit may be deployed. The user configuration indicates that a user has specific autonomy. The user may determine whether to provide the computing power for collaboration. For example, if computing power resource is used for another use, the execution unit is not deployed. When the deployment policy information includes a plurality of deployment requirements, only some deployment requirements may be met, and some execution units are deployed.

If the execution unit is deployed, S604 and subsequent steps are performed. Otherwise, S604' is performed.

S604: The computing power node sends task request information to a resource scheduling device.

The computing power node may determine, based on the first condition, whether to send the task request information.

It may be understood that the computing power node may only request a task for some execution units. In other words, the task request information may include only information of some execution units.

S605 and subsequent steps are similar to S505 and subsequent steps. Details are not described again.

S604': The computing power node sends second information to the first resource scheduling unit, where the second information indicates that the computing power node does not deploy an execution unit. Correspondingly, the first resource scheduling unit receives the second information.

Optionally, the first resource scheduling unit regenerates deployment policy information based on the second information. Because the computing power node does not deploy the execution unit, the first resource scheduling unit reselects another appropriate computing power node to deploy an execution unit. Subsequent steps are similar to S501 and subsequent steps. Details are not described again. For example, the deployment policy information includes that the computing power node 1 and the computing power node 2 respectively deploy execution units of a same task type, the computing power node 1 normally deploys the execution unit, and the computing power node 2 does not deploy the execution unit. In this case, the computing power node 1 may complete a task originally scheduled to the computing power node 2, and a deployment policy does not need to be regenerated, so that service continuity may be ensured, and scheduling policy adjustment and task migration in a dynamic scenario can be reduced to some extent. If the execution unit is not deployed, and there is not another execution unit that is of a same task type and to which a task may be transferred, a deployment policy may be regenerated, and another computing power node deploys the execution unit.

The first resource scheduling unit may obtain scheduled task information from the second resource scheduling unit, and the first resource scheduling unit further regenerates deployment policy information based on the scheduled task information, to obtain a more accurate result.

For example, for a positioning service, the resource scheduling device generates the to-be-scheduled task information, as shown in Table 9.

**Table 9**

| Task type | Task ID |
|---|---|
| 1 (Data preprocessing) | 1 |
| 2 (AI inference) | 2 to 30 |
| 3 (Data post-processing) | 31 |

The resource scheduling device generates the deployment policy information, as shown in Table 10.

**Table 10**

| Computing power node ID | Task type |
|---|---|
| 1 | 1 |
| 2 | 2 |
| 3 | 2 and 3 |

The resource scheduling device separately sends the deployment policy information to computing power nodes 1, 2, and 3.

The computing power nodes 1, 2, and 3 receive the deployment policy information, and determine, based on the deployment policy information and a first condition, whether to deploy an execution unit. If a battery level of the computing power node 1 is less than a threshold, the execution unit is not deployed, and the second information is sent to the resource scheduling device, to indicate that the computing power node 1 does not deploy the execution unit. A computing power resource of the computing power node 2 is insufficient, the execution unit is not deployed, and the second information is sent to the resource scheduling device, to indicate that the computing power node 2 does not deploy the execution unit. The computing power node 3 meets the first condition, and deploys the execution unit 1 for executing the task type 2 and the execution unit 2 for executing the task type 3.

The resource scheduling device receives the second information of the computing power node 1 and the computing power node 2. The computing power node 1 does not deploy the execution unit of the task type 1, and no other computing power node deploys the execution unit of the task type 1. Therefore, the execution unit of the task type 1 needs to be re-deployed on another computing power unit. The resource scheduling device regenerates the deployment policy information, as shown in Table 11.

**Table 11**

| Computing power node ID | Task type |
|---|---|
| 3 | 1 |

The computing power node 2 does not deploy the execution unit of the task type 2, but the computing power node 3 deploys the execution unit of the task type 2, and the task of the task type 2 may be allocated to the computing power node 3 for execution. Therefore, re-deployment of the execution unit is not needed.

The computing power node 3 receives the regenerated deployment policy information, and determines, based on the deployment policy information and the first condition, whether to deploy an execution unit. The computing power node 3 meets the first condition, and deploys the execution unit 3 for executing the task type 1.

The computing power node 3 sends the task request information to the resource scheduling device, as shown in Table 12.

**Table 12**

| Computing power node ID | Execution unit ID | Executable task type |
|---|---|---|
| 3 | 1 | 2 |
| 3 | 2 | 3 |
| 3 | 3 | 1 |

Initial scheduled task information of the resource scheduling device does not include any task. The to-be-scheduled task information is searched for tasks of the task types 1, 2, and 3 based on the task request information of the computing power node 3, and the task 1 is scheduled to the computing power node 3. The execution policy information is shown in Table 13.

**Table 13**

| Computing power node ID | Execution task ID |
|---|---|
| 3 | 1 |

The computing power node 3 executes a corresponding task after receiving the execution policy information.

Based on the related embodiments described in FIG. 4, FIG. 6, and FIG. 7, when the resource scheduling device is located on a cloud/edge side, the resource scheduling device may communicate with a terminal-side computing power node via a radio resource manager (Radio Resource Management, RRM). Specifically, the resource scheduling device sends information to the RRM, and the RRM may forward the information to the terminal-side computing power node. The terminal-side computing power node sends the information to the RRM, and the RRM forwards the information to the resource scheduling device.

The RRM may perform filtering (or referred to as screening/processing, or the like) on the information. Specifically, the RRM may analyze the information based on a status (information such as channel quality, a moving speed, a location, and a battery level) of the terminal-side computing power node, and determine whether to continue to send the information. Optionally, the RRM returns filtering indication information to notify the information sender that the information is filtered. In a process in which the terminal-side computing power node participates in collaborative computing, the terminal-side computing power node needs to exchange data with the network side. Therefore, an air interface transmission capability in a scenario in which a wireless terminal side participates in collaboration is also one of factors considered by the computing power node. The RRM is generally located on the edge side, and may detect a channel state of a wireless air interface on a terminal side in real time and quickly identify whether the terminal side has a collaboration capability. The RRM may assist a resource scheduling system (one or more resource scheduling devices) in filtering related information, and jointly determine a computing power scheduling policy with the resource scheduling system, so that resource scheduling performance can be further improved. Because a status of the terminal-side computing power node may frequently change, the RRM may perform filtering in all or some steps of information exchange between the network side and the terminal side in this embodiment of this application.

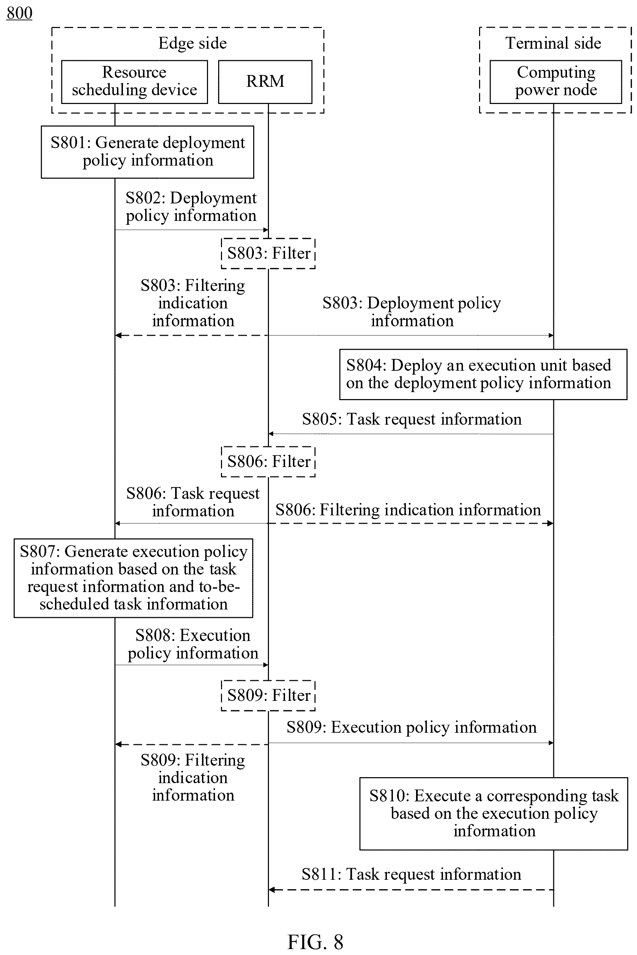

FIG. 8 is a schematic interaction flowchart of a scheduling method according to an embodiment of this application. The embodiment described in FIG. 6 is used as an example for description. The method 800 may include the following steps.

S801: A resource scheduling device generates deployment policy information.

S802: The resource scheduling device sends the deployment policy information to an RRM.

S803: The RRM separately sends the deployment policy information to a computing power node involved in the deployment policy information. Correspondingly, the computing power node receives the deployment policy information.

The RRM may filter the deployment policy information. Specifically, the deployment policy information is analyzed based on a status (information such as channel quality, a moving speed, a location, and a battery level) of the terminal-side computing power node, to determine whether the terminal-side computing power node is suitable for deploying an execution unit. If the terminal-side computing power node is suitable for deploying the execution unit, the deployment policy information is sent to the computing power node. Otherwise, the deployment policy information is not sent.

The RRM may send filtering indication information to the resource scheduling device, to indicate filtered deployment policy information.

For example, a channel quality threshold SNR_SET=8 dB is configured. When channel quality SNR of the terminal-side computing power node is greater than or equal to SNR_SET, the terminal-side computing power node may deploy the execution unit and participate in computing and transmission. For example, channel quality SNR of the computing power node 1=20 dB, and radio channel quality SNR of the computing power node 2=25 dB. Therefore, both the computing power nodes may deploy the execution unit. In this case, after the deployment policy information is filtered via the radio resource manager, the deployment policy information is still separately sent to the computing power node 1 and the computing power node 2. For another example, channel quality SNR of the computing power node 1=20 dB, and radio channel quality SNR of the computing power node 2=5 dB. Therefore, the computing power node 2 cannot deploy the execution unit and participate in computing and transmission. In this case, after the deployment policy information is filtered via the radio resource manager, only the deployment policy information is sent to the computing power node 1, and the filtering indication information is sent to the resource scheduling device, to indicate that the computing power node 2 cannot deploy the execution unit. For another example, channel quality SNR of the computing power node 1=3 dB, and radio channel quality SNR of the computing power node 2=25 dB. Therefore, the computing power node 1 cannot deploy the execution unit and participate in computing and transmission. In this case, after the deployment policy information is filtered via the radio resource manager, only the deployment policy information is sent to the computing power node 2, and the filtering indication information is sent to the resource scheduling device, to indicate that the computing power node 1 cannot deploy the execution unit.

S804: The computing power node deploys an execution unit based on the deployment policy information.

S805: The computing power node sends task request information to the RRM.

S806: The RRM sends the task request information to the resource scheduling device.

The RRM may filter the task request information. Specifically, the task request information is analyzed based on a status (information such as channel quality, a moving speed, a location, and a battery level) of the terminal-side computing power node, to determine whether the terminal-side computing power node is suitable for processing a task. If the terminal-side computing power node is suitable for processing a task, the task request information is sent to the second resource scheduling device. Otherwise, the task request information is not sent.

Optionally, the RRM sends the filtering indication information to the computing power node, to indicate that the task request information is filtered.

For example, a channel quality threshold SNR_SET=8 dB is configured. When channel quality SNR of the terminal-side computing power node is greater than or equal to SNR_SET, the terminal-side computing power node may process a task. For example, channel quality SNR of the computing power node 1=20 dB, and radio channel quality SNR of the computing power node 2=25 dB. Therefore, the two computing power nodes process tasks. In this case, after the task request information is filtered via the radio resource manager, the task request information of the computing power node 1 and the computing power node 2 are still sent to the second resource scheduling device. For another example, channel quality SNR of the computing power node 1=20 dB, and radio channel quality SNR of the computing power node 2=5 dB. Therefore, the computing power node 2 is not suitable for processing a task. In this case, after the deployment policy information is filtered via the radio resource manager, only the task request information of the computing power node 1 is sent to the resource scheduling device, and the filtering indication information is sent to the computing power node 2, to indicate that a task request of the computing power node 2 is invalid and no task is allocated. For another example, channel quality SNR of the computing power node 1=3 dB, and radio channel quality SNR of the computing power node 2=25 dB. Therefore, the computing power node 1 is not suitable for processing a task. In this case, after the deployment policy information is filtered via the radio resource manager, only the task request information of the computing power node 2 is sent to the resource scheduling device, and the filtering indication information is sent to the computing power node 1, to indicate that a task request of the computing power node 1 is invalid and no task is allocated.

S807: The resource scheduling device generates execution policy information and scheduled task information based on the task request information and to-be-scheduled task information, and updates the to-be-scheduled task information based on the scheduled task information. The to-be-scheduled task information is obtained from the resource scheduling device.

S808: The resource scheduling device sends the execution policy information to the RRM.

S809: The RRM sends the execution policy information to the computing power node.

The RRM may filter the execution policy information. Specifically, the execution policy information is analyzed based on a status (information such as channel quality, a moving speed, a location, and a battery level) of the terminal-side computing power node, to determine whether the terminal-side computing power node is suitable for processing a task. If the terminal-side computing power node is suitable for processing a task, the execution policy information is sent to the computing power node. Otherwise, the execution policy information is not sent.

Optionally, the RRM sends the filtering indication information to the second resource scheduling device, to indicate filtered execution policy information.

For example, a channel quality threshold SNR_SET=8 dB is configured. When channel quality SNR of the terminal-side computing power node is greater than or equal to SNR_SET, the terminal-side computing power node may process a task. For example, channel quality SNR of the computing power node 1=20 dB, and radio channel quality SNR of the computing power node 2=25 dB. Therefore, both the computing power nodes may process tasks. In this case, after the execution policy information is filtered via the radio resource manager, the execution policy information is still separately sent to the computing power node 1 and the computing power node 2. For another example, channel quality SNR of the computing power node 1=20 dB, and radio channel quality SNR of the computing power node 2=5 dB. Therefore, the computing power node 2 cannot execute a task. In this case, after the execution policy information is filtered via the radio resource manager, only the execution policy information is sent to the computing power node 1, and the filtering indication information is sent to the second resource scheduling device, to indicate that the computing power node 2 cannot execute a task. For another example, channel quality SNR of the computing power node 1=3 dB, and radio channel quality SNR of the computing power node 2=25 dB. Therefore, the computing power node 1 cannot execute a task. In this case, after the execution policy information is filtered via the radio resource manager, only the execution policy information is sent to the computing power node 2, and the filtering indication information is sent to the second resource scheduling device, to indicate that the computing power node 1 cannot execute a task.

S810: The computing power node executes a corresponding task based on the execution policy information.

Optionally, S811: After the execution is completed, the computing power node sends the task request information to the RRM again. This is similar to step S805, and subsequent steps S806 to S811 continue to be performed. The computing power node may determine, based on a computing power node battery level, a computing power resource, a user configuration, and other conditions, whether to send the task request information again. When the conditions are met, the task request information is sent again. Otherwise, the task request information is not sent. This step may be repeated a plurality of times, and is not described again.

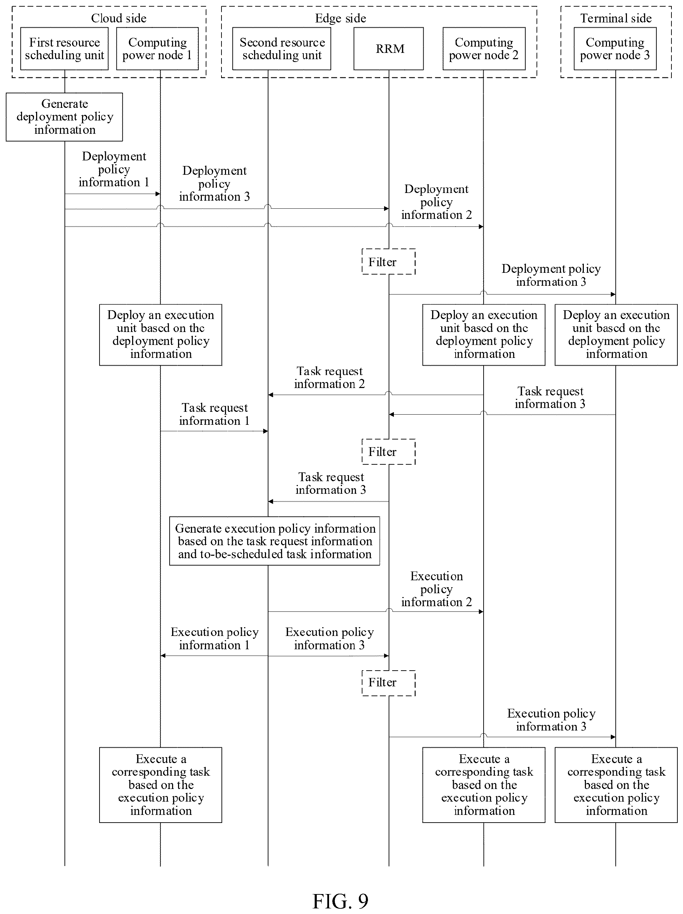

FIG. 9 is an embodiment of a case in which the resource scheduling device is divided into two scheduling units in the embodiment in FIG. 8. In this embodiment, a first resource scheduling unit and a computing power node 1 are located on a cloud side, a second scheduling unit, an RRM, and a computing power node 2 are located on an edge side, and a computing power node 3 is located on a terminal side. The computing power node 3 exchanges information with the first resource scheduling unit or the second resource scheduling unit by using the RRM, and the computing power node 1 and the computing power node 2 do not exchange information by using the RRM.

The first resource scheduling unit generates to-be-scheduled task information and deployment policy information based on first information. The deployment policy information is separately sent to the computing power node 1, the computing power node 2, and the RRM. The RRM forwards the deployment policy information to the computing power node 3. The computing power nodes 1, 2, and 3 respectively deploy execution units based on the deployment policy information. The computing power node 1 and the computing power node 2 send task request information to the second resource scheduling unit, the computing power node 3 sends the task request information to the RRM, and the RRM forwards the task request information to the second resource scheduling unit. The second resource scheduling unit generates execution policy information based on the task request information of the computing power nodes 1, 2, and 3 and the to-be-scheduled task information. The second resource scheduling unit separately sends the execution policy information to the computing power node 1 and the computing power node 2, and the RRM. The RRM forwards the execution policy information to the computing power node 3. The computing power nodes 1, 2, and 3 execute corresponding tasks based on the execution policy information. The RRM may perform the related filtering function described in the foregoing embodiment. Details are not described herein again.

In this embodiment, when the resource scheduling device is divided into two parts, the first resource scheduling unit that generates the deployment policy information is disposed on the cloud side, and the second resource scheduling unit that generates the execution policy information is disposed together with the RRM on the edge side. A multi-hop transmission delay generally exists in transmission between the cloud and the edge. In addition, due to privacy limitation, some information in the RRM is not transmitted to the cloud side, or a transmission frequency is low. Therefore, the second resource scheduling unit and the RRM are deployed together on the edge side, so that related information of the RRM may be quickly learned, improving transmission efficiency and information security.

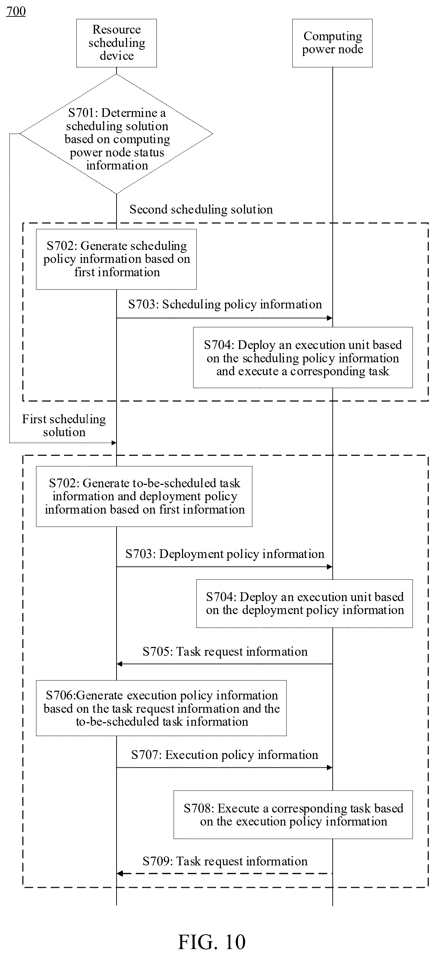

Based on the related embodiments described in FIG. 4, FIG. 6, FIG. 7, FIG. 8, and FIG. 9, this embodiment of this application further has a hybrid scheduling capability, and may be compatible with a deterministic scheduling method. Specifically, a scheduling solution may be selected based on status information. FIG. 10 is described by using an example in which selection of a scheduling method is implemented based on the embodiment described in FIG. 4. FIG. 10 is a schematic interaction flowchart of a scheduling method according to an embodiment of this application. The method 700 may include the following steps.

S701: A resource scheduling device determines a scheduling solution based on status information. The scheduling solution includes a first scheduling solution and a second scheduling solution. The first scheduling solution may be the scheduling solution of the method 400. Scheduling of the resource scheduling device is combined with an active request of the computing power node, so that more flexible scheduling can be implemented. The second scheduling solution may be a deterministic scheduling solution. To be specific, the resource scheduling device generates scheduling policy information and sends the scheduling policy information to a corresponding computing power node, and the computing power node deploys an execution unit and executes a task (refer to the related solution described in the embodiment of FIG. 3). The status information includes a computing power resource status and/or a node connection status.

The resource scheduling device may determine a scheduling solution based on the computing power resource status and/or the node connection status in the status information. The status information may be directly reported by the computing power node, obtained through system prediction, or the like. If the computing power node is located on a terminal side, the RRM may directly report the status information to the resource scheduling device, or the computing power node reports the status information to the RRM on an edge side, and then the RRM forwards the status information to the resource scheduling device, or the RRM filters the status information and then forwards the status information to the resource scheduling device. Specifically, if the computing power resource status and the connection status change frequently, the first scheduling solution is selected, so that scheduling is more flexible and suitable for a scenario in which a status changes frequently. Otherwise, the second scheduling solution is selected, so that a procedure is simpler.

For example, a computing power resource status and a connection status of a wireless terminal-side computing power node and/or an edge-side computing power node (like a satellite or a temporarily deployed uncrewed aerial vehicle having a base station function) of a non-terrestrial base station generally change frequently. The wireless terminal-side computing power node (a user mobile phone) may face a large quantity of uncertain computing tasks or user configurations, resulting in high uncertainty in a computing power resource that can be scheduled, and network connection of the edge-side computing power node of the non-terrestrial base station is easily interfered, but a computing power resource status and a connection status of a cloud-side computing power node and an edge-side computing power node of a ground base station change little.

If the first scheduling solution is selected, subsequent steps are the same as those in the method 400. Details are not described again.

If the second scheduling solution is selected, the following steps are performed.

S702: The resource scheduling device generates the scheduling policy information. The scheduling policy information includes a computing power node ID and a task ID.

S703: The resource scheduling device separately sends the scheduling policy information to a computing power node involved in the scheduling policy information. Correspondingly, the computing power node receives the scheduling policy information.

S704: The computing power node deploys an execution unit based on the scheduling policy information, and executes a corresponding task.

For more details, refer to the related solution described in the embodiment in FIG. 3. Details are not described again.

In this embodiment of this application, the scheduling policy may be adjusted based on computing power resource status information, a scheduling mode may be switched, and the scheduling policy is more flexible.

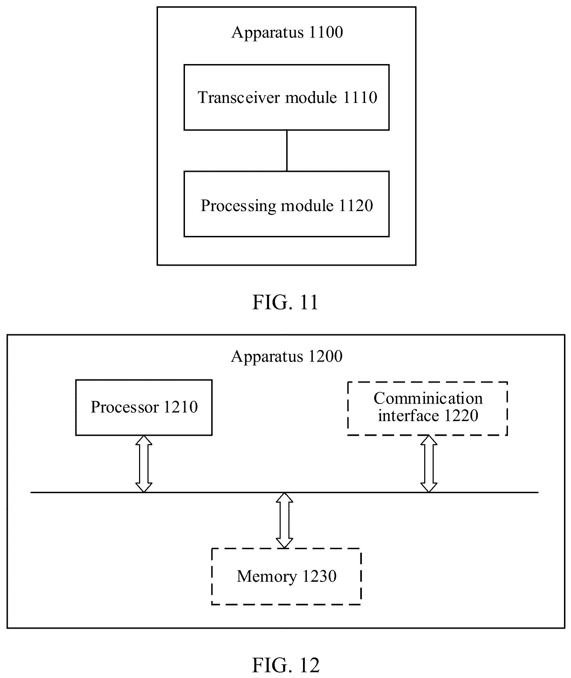

FIG. 11 is a diagram of a structure of an apparatus 1100 according to an embodiment of this application.

The apparatus 1100 includes a transceiver module 1110, configured to receive and send a signal or information. The apparatus 1100 includes a processing module 1120, configured to process a received signal or information. The processing module 1120 may further generate a to-be-sent signal or to-be-sent information, for example, is configured to generate a signal or information to be sent by using the transceiver module 1110.

In a possible implementation, the apparatus 1100 is configured to implement a function of the resource scheduling device in the methods in the embodiments described in FIG. 4 and FIG. 6 to FIG. 10. The apparatus may be a resource scheduling device, or may be another apparatus that can implement the function of the resource scheduling device. The another apparatus can be installed in the resource scheduling device or can be used in cooperation with the resource scheduling device.

The processing module 1120 may be configured to generate deployment policy information. The transceiver module 1110 may be configured to send the deployment policy information to a computing power node involved in the deployment policy information. The transceiver module 1110 may be further configured to receive task request information. The processing module 1120 may be further configured to generate execution policy information based on the task request information and to-be-scheduled task information. The transceiver module 1110 may be further configured to send the execution policy information to the computing power node.

It should be understood that specific processes performed by the modules are described in detail in the foregoing method embodiments. For brevity, details are not described herein again.

In a possible implementation, the apparatus 1100 is configured to implement a function of the computing power node in the methods in the embodiments described in FIG. 4 and FIG. 6 to FIG. 10. The apparatus may be a computing power node, or may be another apparatus that can implement a function of the computing power node. The another apparatus can be installed in the computing power node or can be used in cooperation with computing power node.

The transceiver module 1110 may be configured to receive deployment policy information. The processing module 1120 may be configured to deploy an execution unit. The transceiver module 1110 may be further configured to send task request information. The transceiver module 1110 may be further configured to receive execution policy information. The processing module 1120 may be further configured to execute a corresponding task based on the execution policy information.

It should be understood that specific processes performed by the modules are described in detail in the foregoing method embodiments. For brevity, details are not described herein again.

In a possible implementation, the apparatus 1100 is configured to implement a function of the first resource scheduling unit in the methods in the embodiments described in FIG. 6, FIG. 7, and FIG. 9. The apparatus may be a resource scheduling device including the first resource scheduling unit, or may be another apparatus that can implement the function of the first resource scheduling unit. The another apparatus can be installed in the resource scheduling device or can be used in cooperation with the resource scheduling device.

The processing module 1120 may be configured to generate deployment policy information. The transceiver module 1110 may be configured to send the deployment policy information to a computing power node involved in the deployment policy information.

It should be understood that specific processes performed by the modules are described in detail in the foregoing method embodiments. For brevity, details are not described herein again.

In a possible implementation, the apparatus 1100 is configured to implement a function of the second resource scheduling unit in the methods in the embodiments described in FIG. 6, FIG. 7, and FIG. 9. The apparatus may be a resource scheduling device including the second resource scheduling unit, or may be another apparatus that can implement the function of the first resource scheduling unit. The another apparatus can be installed in the resource scheduling device or can be used in cooperation with the resource scheduling device.

The transceiver module 1110 may be configured to receive task request information. The processing module 1120 may be configured to generate execution policy information based on the task request information and to-be-scheduled task information. The transceiver module 1110 may be further configured to send the execution policy information to a computing power node.

It should be understood that specific processes performed by the modules are described in detail in the foregoing method embodiments. For brevity, details are not described herein again.

The transceiver module 1110 in the communication apparatus 1100 may be implemented by using a transceiver, for example, may correspond to a communication interface 1220 in a communication apparatus 1200 shown in FIG. 12. The processing module 1120 in the communication apparatus 1100 may be implemented by using at least one processor, for example, may correspond to a processor 1210 in the communication apparatus 1200 shown in FIG. 12.

In embodiments of this application, module division is illustrative, and is a logical function division. During actual implementation, another division manner may be used. In addition, functional modules in embodiments of this application may be integrated into one module, or may exist alone physically, or two or more foregoing modules are integrated into one module. The integrated module may be implemented in the form of hardware, or may be implemented in the form of a software functional module.

FIG. 12 is a diagram of a structure of an apparatus 1200 according to an embodiment of this application.

In a possible implementation, the apparatus 1200 is configured to implement a function of the resource scheduling device in the methods in the embodiments described in FIG. 4 and FIG. 6 to FIG. 10. The apparatus may be a resource scheduling device, or may be another apparatus that can implement the function of the resource scheduling device. The another apparatus can be installed in the resource scheduling device or can be used in cooperation with the resource scheduling device. For example, the apparatus 1200 may be a chip system. In this embodiment of this application, the chip system may include a chip, or may include a chip and another discrete component. For example, the apparatus 1200 includes at least one processor 1210, configured to implement the function of the resource scheduling device in the method provided in this embodiment of this application.

In a possible implementation, the apparatus 1200 is configured to implement a function of the computing power node in the methods in the embodiments described in FIG. 4 and FIG. 6 to FIG. 10. The apparatus may be a computing power node, or may be another apparatus that can implement a function of the computing power node. The another apparatus can be installed in the computing power node or can be used in cooperation with computing power node. For example, the apparatus 1200 may be a chip system. For example, the apparatus 1200 includes at least one processor 1210, configured to implement the function of the computing power node in the method provided in this embodiment of this application.

In a possible implementation, the apparatus 1200 is configured to implement a function of the first resource scheduling unit in the methods in the embodiments described in FIG. 4 and FIG. 6 to FIG. 10. The apparatus may be a resource scheduling device, or may be another apparatus that can implement the function of the first resource scheduling unit. The another apparatus can be installed in the resource scheduling device or can be used in cooperation with the resource scheduling device. For example, the apparatus 1200 may be a chip system. In this embodiment of this application, the chip system may include a chip, or may include a chip and another discrete component. For example, the apparatus 1200 includes at least one processor 1210, configured to implement the function of the first resource scheduling unit in the method provided in this embodiment of this application.

In a possible implementation, the apparatus 1200 is configured to implement a function of the second resource scheduling unit in the methods in the embodiments described in FIG. 4 and FIG. 6 to FIG. 10. The apparatus may be a resource scheduling device, or may be another apparatus that can implement the function of the second resource scheduling unit. The another apparatus can be installed in the resource scheduling device or can be used in cooperation with the resource scheduling device. For example, the apparatus 1200 may be a chip system. In this embodiment of this application, the chip system may include a chip, or may include a chip and another discrete component. For example, the apparatus 1200 includes at least one processor 1210, configured to implement the function of the second resource scheduling unit in the method provided in this embodiment of this application.

The apparatus 1200 may further include at least one memory 1230, configured to store program instructions and/or data. The memory 1230 is coupled to the processor 1210. The coupling in this embodiment of this application may be an indirect coupling or a communication connection between apparatuses, units, or modules in an electrical form, a mechanical form, or another form, and is used for information exchange between the apparatuses, the units, or the modules. The processor 1210 may cooperate with the memory 1230 to implement the functions described in the foregoing method embodiments. The processor 1210 may execute the program instructions stored in the memory 1230. At least one of the at least one memory may be included in the processor 1210.

The apparatus 1200 may further include a communication interface 1220, configured to communicate with another device through a transmission medium, so that an apparatus in the apparatus 1200 may communicate with the another device. The processor 1210 receives and sends a signal through the communication interface 1220, to implement the functions described in the foregoing method embodiments. In embodiments of this application, the communication interface may be a transceiver, a circuit, a bus, a module, a pin, or a communication interface of another type.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and completed by using a hardware processor, or may be performed and completed by using a combination of hardware and software modules in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in the form of an instruction or a data structure and that can be accessed by a computer, but is not limited thereto. The memory in embodiments of this application may alternatively be a circuit or any other apparatus that can implement a storage function, and is configured to store the program instructions and/or the data.

The technical solutions provided in embodiments of this application may be fully or partially implemented through software, hardware, firmware, or any combination thereof. When software is used to implement embodiments, all or some embodiments may be implemented in the form of a computer program product. The computer program product includes one or more computer instructions. When the computer program instructions are loaded and executed on the computer, the procedure or functions according to embodiments of the present invention are all or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A computing power resource scheduling method in a communication system, comprising:
sending, by a resource scheduling device, deployment policy information to a corresponding computing power node;
receiving, by the resource scheduling device, task request information generated by the computing power node based on the deployment policy information; and
sending, by the resource scheduling device, execution policy information to the computing power node, wherein the execution policy information is generated based on the task request information and to-be-scheduled task information.

2. The method according to claim 1, wherein
the deployment policy information comprises a computing power node ID and a deployment task type;
the task request information comprises the computing power node ID and an executable task type;
the execution policy information comprises the computing power node ID and a to-be-executed task ID; and
the to-be-scheduled task information comprises a to-be-scheduled task ID and a to-be-scheduled task type.

3. The method according to claim 2, wherein
the task request information further comprises an execution unit ID; and
the execution policy information further comprises the execution unit ID.

4. The method according to claim 2 or 3, wherein the deployment policy information further comprises computing power resource requirement information.

5. The method according to any one of claims 1 to 4, wherein the to-be-scheduled task information and the deployment policy information are generated based on first information, and the first information comprises a service requirement.

6. The method according to claim 5, wherein the first information further comprises at least one of the following: computing power node resource information, status information, and scheduled task information.

7. The method according to any one of claims 1 to 6, further comprising:
receiving, by the resource scheduling device, second information sent by the computing power node, wherein
the second information indicates that the computing power node does not deploy an execution unit.

8. The method according to any one of claims 1 to 7, wherein the method further comprises: generating, by the resource scheduling device, the execution policy information based on the task request information, the to-be-scheduled task information, and the scheduled task information.

9. The method according to any one of claims 1 to 8, wherein the resource scheduling device sends information to a computing power node on a terminal side or receives information from a computing power node on a terminal side via a radio resource manager.

10. The method according to claim 9, wherein the information sent by the resource scheduling device to the computing power node on the terminal side and the information received from the computing power node on the terminal side are filtered by the radio resource manager.

11. A computing power resource scheduling method in a communication system, comprising:
obtaining, by a computing power node, deployment policy information sent by a resource scheduling device;
sending, by the computing power node, task request information to the resource scheduling device, wherein the task request information is generated based on the deployment policy information;
receiving, by the computing power node, execution policy information sent by the resource scheduling device; and
executing, by the computing power node, a corresponding task based on the execution policy information.

12. The method according to claim 11, wherein
the deployment policy information comprises a computing power node ID and a deployment task type;
the task request information comprises the computing power node ID and an executable task type; and
the execution policy information comprises the computing power node ID and a to-be-executed task ID.

13. The method according to claim 12, wherein the method further comprises: deploying, by the computing power node, an execution unit based on the deployment policy information.

14. The method according to claim 13, wherein the task request information and the execution policy information comprise an execution unit ID.

15. The method according to claim 13 or 14, wherein deploying, by the computing power node, the execution unit based on the deployment policy information comprises:
obtaining, by the computing power node, corresponding execution unit information based on the deployment task type in the deployment policy information, and creating the execution unit based on the execution unit information, wherein
the execution unit information comprises an execution file or a running environment.

16. The method according to claim 15, wherein
the deployment policy information comprises computing power resource requirement information; and
the computing power node creates the execution unit based on the computing power resource requirement information.

17. The method according to any one of claims 13 to 16, further comprising:
determining, by the computing power node based on the deployment policy information and a first condition, whether to deploy an execution unit, wherein
the first condition comprises at least one of the following: a computing power node battery level, a computing power resource, and a user configuration.

18. The method according to claim 17, wherein the computing power node sends second information to the resource scheduling device if the computing power node does not deploy an execution unit, wherein the second information indicates that the computing power node does not deploy an execution unit.

19. The method according to any one of claims 11 to 18, wherein the computing power node sends information to the resource scheduling device or receives information from the resource scheduling device via a radio resource manager.

20. The method according to claim 19, wherein the information sent by the computing power node to the resource scheduling device and the information received from the resource scheduling device are filtered by the radio resource manager.

21. A computing power resource scheduling apparatus in a communication system, comprising a module configured to perform the method according to any one of claims 1 to 10, or comprising a module configured to perform the method according to any one of claims 11 to 20.

22. A computing power resource scheduling apparatus in a communication system, comprising a processor, wherein the processor is configured to perform the method according to any one of claims 1 to 20 by running a computer program or by using a logic circuit.

23. The apparatus according to claim 22, further comprising a memory, wherein the memory is configured to store the computer program.

24. The apparatus according to claim 22 or 23, further comprising a communication interface, wherein the communication interface is configured to input and/or output a signal.

25. A computing power resource scheduling system in a communication system, comprising a resource scheduling device configured to perform the method according to any one of claims 1 to 10, and a computing power node configured to perform the method according to any one of claims 11 to 20.

26. A computing power resource scheduling system in a communication system, wherein the computing power resource scheduling system comprises at least two resource scheduling devices, and the at least two resource scheduling devices comprise a first resource scheduling unit and a second resource scheduling unit, wherein
the first resource scheduling unit is configured to generate deployment policy information, and send the deployment policy information to a corresponding computing power node; and
the second resource scheduling unit is configured to receive task request information generated by the computing power node based on the deployment policy information, generate execution policy information based on the task request information and the to-be-scheduled task information, and send the execution policy information to the computing power node.

27. The computing power resource scheduling system according to claim 26, wherein a resource scheduling device comprising the second resource scheduling unit is located on an edge side, and a resource scheduling device comprising the first resource scheduling unit is located on a cloud side.

28. A computer-readable storage medium, configured to store computer program instructions, wherein the computer program enables a computer to perform the method according to any one of claims 1 to 20.

29. A computer program product, comprising computer program instructions, wherein the computer program instructions enable a computer to perform the method according to any one of claims 1 to 20.
